# EUROPÄISCHE PATENTSCHRIFT

(11) **EP 1 981 998 B1**
(45) Veröffentlichungstag und Bekanntmachung des Hinweises auf die Patenterteilung: **02.01.2013**
(21) Anmeldenummer: 07703060.9
(22) Anmeldetag: 26.01.2007
(51) Int. Cl.: C13B 20/04, C13B 20/06, C13B 20/02

(54) **SCHADSTOFFARME TROCKNUNG VON ZUCKERRÜBENSCHNITZELN**
LOW-EMISSION DRYING OF SUGAR BEET CHIPS
SÉCHAGE PEU POLLUANT DE COSSETTES DE BETTERAVE À SUCRE

(30) Priorität: 28.01.2006 DE 102006004103
(43) Veröffentlichungstag der Anmeldung: 22.10.2008
(73) Patentinhaber: Südzucker AG Mannheim/Ochsenfurt, 68165 Mannheim (DE)
(72) Erfinder: AJDARI RAD, Mohsen, 67283 Obrigheim (DE); FRENZEL, Stefan, 69469 Weinheim (DE); SHAHIDIZENOUZ, Azar, 67283 Obrigheim (DE)
(74) Vertreter: Schwahn, Hartmut
(86) Internationale Anmeldenummer: PCT/EP2007/000672
(87) Internationale Veröffentlichungsnummer: WO 2007/085467

(56) Entgegenhaltungen:
- EP-A1- 0 058 651
- BE-A6- 1 006 318
- DE-A1- 3 028 366
- DE-A1- 3 206 518
- GB-A- 470 797
- GB-A- 1 590 068

## Beschreibung

Die Erfindung liegt im technischen Gebiet der Verarbeitung von Zuckerrüben, besonders die Gewinnung von Saccharose und die Verwertung der dabei anfallenden Zuckerrübenschnitzel zu Trockenfuttermitteln. Die Erfindung betrifft ein verbessertes Verfahren zur Trocknung der extrahierten Rübenschnitzel sowie Mittel und Vorrichtungen zur Durchführung des Verfahrens, wobei insbesondere die Emission organischer Kohlenstoftverbindungen bei der Trocknung der Schnitzel vermindert wird sowie eine Einsparung an Primärenenergieeinsatz erreicht wird.

Für die Zuckerherstellung werden die Zuckerrüben geerntet, gewaschen und in Schnitzelschneidemaschinen zu in der Regel bleistiftstarken Schnitzeln verarbeitet. Die Rübenschnitzel werden anschließend, in der Regel im Gegenstrom, meist nach dem Diffusionsverfahren, mit heißem Wasser (65 bis 75 °C) extrahiert. Es werden extrahierte Zuckerrübenschnitzel und zuckerhaltiger Zuckerrüben-Rohsaft erhalten.

Der Zuckerrüben-Rohsaft wird einer so genannte Saftreinigung oder Extraktreinigung unterzogen, wobei der Rohsaft in der Regel mittels Kalkmilch alkalisiert wird, um Nichtsaccharosestoffe aus dem Rohsaft zu entfernen und den, vor allem enzymatischen und säurekatalysierten, Saccharoseabbau zu stoppen. Die Nichtsaccharosestoffe werden koaguliert und ausgefällt und aus dem Rohsaft mittels mechanischer und/oder physikalischer Trennungsverfahren abgetrennt und gegebenenfalls aufkonzentriert. Die Saftreinigung unterteilt sich in der Regel in eine Vorkalkungsstufe und mindestens eine Hauptkalkungsstufe sowie eine anschließende mindestens erste Carbonatation und gegebenenfalls eine zweite oder weitere Carbonatation. Das aus der Saftreinigung erhaltene Produkt ist ein klarer, hellgelber, zuckerhaltiger so genannter Dünnsaft; er enthält etwa 15 bis 17 % Zucker.

In weiteren Verarbeitungsstufen wird der Dünnsaft durch thermischen Wasserentzug zu einem so genannten Dicksaft mit einem Gehalt von etwa 65 bis 70 % Zucker eingedickt und dann in Kristallisatoren solange eingedampft, bis sich eine zähe Masse, die so genannte Kochmasse, mit einem Gehalt von etwa 85 % Zucker bildet. Die kristalline saccharosehaltige Masse wird anschließend durch Zentrifugieren in den kristallinen Weißzucker und die nichtkristalline Melasse aufgetrennt. Gegebenenfalls wird der erhaltene Weißzucker zur weiteren Verarbeitung in Wasser aufgelöst, wodurch Zuckersirup erhalten wird, oder mindestens einem Raffinationsschritt unterzogen, wodurch Zuckerraffinade, beispielsweise Haushaltszucker, erhalten wird.

Das Nebenerzeugnis der Zuckerrüben-Rohsaftverarbeitung ist die Melasse. Sie enthält etwa 50 % Saccharose in nichtkristalliner Form, die daraus üblicherweise nicht mehr kristallisiert wird. Um daraus weitere Saccharose zu gewinnen, kann Melasseextrakt eingesetzt werden. Daneben enthält die Melasse weitere Pflanzeninhaltsstoffe der Zuckerrübe wie Vitamine und Mineralstoffe und andere Nichtsaccharosestoffe wie Farbstoffe.

Die extrahierten Zuckerrübenschnitzel bestehen im Wesentlichen aus Zellwand- und Faserbestandteilen der extrahierten Rübe. Zur Weiterverarbeitung der Rübenschnitzel werden diese in der Regel durch Verpressen in so genannten Schnitzelpressen weiter entwässert, wodurch die so genannten Pressschnitzel und das freigesetzte Presswasser erhalten werden. Gegebenenfalls werden so genannte Presshilfsmittel, die das Abpressen des Presswassers aus dem Schnitzelmaterial erleichtern, zugegeben. Das erhaltene Presswasser wird in der Regel, teilweise oder vollständig, in die Zuckerrübenextraktion zurückgeführt.

Zur Herstellung von Trockenschnitzeln, werden die Pressschnitzel einer thermischen Entfernung des Restwassers, einer so genannten Schnitzeltrocknung unterzogen. Die Trocknung der Pressschnitzel erfolgt bekanntermaßen unter erhöhter Temperatur in Trockentrommeln einer Trocknungsanlage, wodurch Restwasser und andere flüchtige Bestandteile der Pressschnitzel entweichen. Übliche Trocknungsanlagen sind so genannte Hochtemperaturtrocknungsanlagen (HTT) zur Verdampfungstrocknung. In alternativen Trocknungsverfahren werden die Pressschnitzel durch überhitzten Wasserdampf indirekt im Wirbelschichtverfahren getrocknet.

Bevorzugt beträgt der zu den Pressschnitzeln zudosierte Anteil an alkalischer Eiweißfraktion von etwa 0,1 bis 0,8 kgTS (Trockensubstanz) pro 100 kg Rüben, besonders bevorzugt 0,2 bis 0,4 kgTS/100 kg. Ein Prinzip dieser Erfindung beruht auf der Zugabe einer in dem Prozessschritt Saftreinigung gewonnenen eiweißhaltigen Fraktion zu den Pressschnitzeln zu der HTT.

Die Trockenschnitzel werden, meist in pelletierter Form, als Futtermittel oder Futterzusatzmittel verwendet. Die Trockenschnitzel dienen dabei meist als Träger der zuckerhaltigen Melasse, die in der Regel den Pressschnitzeln noch vor der Trocknung zugegeben wird.

Ein Problem bei der Schnitzeltrocknung ist die Emission flüchtiger organischer Kohlenstoffverbindungen. Diese werden als Anteil des organisch gebundenen Gesamtkohlenstoffs (TOC; total organic content) in der Abluft (Abgas) der Trocknungsanlage ermittelt . Der TOC-Gehalt in den Abgasen einer Trocknungsanlage muss möglichst gering sein. Für die Emissionsbewertung von Zuckerfabriken spielt der TOC-Gehalt in den Trocknungsabgasen eine wesentliche Rolle. Gemäß den aktuellen Richtlinien darf ab dem Jahr 2010 die maximale TOC-Emission nicht mehr als 0,8 kg TOC pro 1 Tonne Rüben (entsprechend 0,08 ppm) betragen. Die Einhaltung dieses Grenzwertes kann für die bekannten und in den meisten Zuckerfabriken etablierten Hochtemperaturtrocknungsanlagen nicht gewährleistet werden. Es ist deshalb erforderlich, den TOC-Gehalt in der Abluft von Schnitzeltrocknungsanlagen zu reduzieren. Dabei sollen vor allem solche Maßnahmen zur TOC-Senkung entwickelt werden, die sich ohne größere Investitionen auch in bestehende Trocknungsanlagen der Zuckerfabriken implementieren lassen.

Die GB 470797 offenbart die Zuführung von Kalksuspension zu Zuckerrübenschnitzeln.

Der vorliegenden Erfindung liegt das technische Problem zugrunde, ein verbessertes Verfahren zur Trocknung von Zuckerrübenschnitzeln bereitzustellen, wobei insbesondere die Freisetzung von organisch gebundenem Kohlenstoff (TOC) in der Schnitzeltrocknung sowie der Primärenergieeinsatz reduziert werden kann.

Die Erfindung löst das ihr zugrunde liegende technische Problem durch Bereitstellung eines Verfahrens zur Trocknung von extrahierten Rübenschnitzeln gemäß Patenanspruch 1. Besonders werden dabei in einem ersten Schritt (a) die Rübenschnitzel nach der Extraktion zu Pressschnitzeln abgepresst und das daraus erhaltene Presswasser wird abgeführt. In dem erfindungsgemäßen, insbesondere unmittelbar nachfolgenden, Schritt (b) wird eine alkalische Kolloidfraktion, die bevorzugt die bei der Saftreinigung von Zuckerrüben-Rohsaft abgetrennte Nichtsaccharosestoff-Fraktion ist, den Pressschnitzeln zugeführt beziehungsweise zudosiert. Gemäß der Erfindung ist die alkalische Kolloidfraktion eine eiweißhaltige Fraktion mit Kolloidbestandteilen. Diese wird erfindungsgemäß als betrieblicher Hilfsstoff für die Schnitzeltrocknung eingesetzt. In einem, vorzugsweise unmittelbar nachfolgenden, Schritt (c) werden die mit der Kolloidfraktion versetzten Pressschnitzel getrocknet.

Vorzugsweise wird in Schritt (b) die Kolloidfraktion zusammen mit der zuckerhaltigen Melasse zudosiert, die bei der Zuckergewinnung aus Zuckerrüben-Rohsaft, insbesondere bei der Zentrifugation des Weißzuckers, anfällt. In einer alternativen Variante wird die Kolloidfraktion bereits vor dem mechanischen Abpressen der extrahierten Rübenschnitzel in die Schnitzelmaische zudosiert.

Die Erfindung sieht also vor, vor dem eigentlichen Trocknungsvorgang den Pressschnitzeln die bevorzugt aus dem Rohsaft abgetrennte alkalische kolloidhaltige Fraktion, gegebenenfalls zusammen mit Melasse, hinzuzufügen und anschließend die Schnitzeltrocknung durchzuführen. Die Erfinder fanden überraschend, dass im Vergleich zur herkömmlichen Schnitzeltrocknung durch die Verwendung der alkalischen
Kolloidfraktion als technischer Hilfsstoff bei der Schnitzeltrocknung der Anteil an TOC in der Abluft der Schnitzeltrocknungsanlage drastisch, das heißt um etwa 50 % reduziert werden kann. Weiter wurde überraschend gefunden, dass der Anteil an Schwefeloxiden, vor allem SO₂, in der Abluft der Schnitzeltrocknungsanlage ebenfalls signifikant reduziert werden kann. Weiter wurde gefunden, dass die so genannte Trommeleintrittstemperatur reduziert werden kann. Die Erfinder fanden weiter, dass durch das erfindungsgemäße Verfahren der Trockensubstanzgehalt der erhaltenen Trockenschnitzel deutlich erhöht werden kann: Es wurde eine zusätzliche Wasserverdampfung von etwa 18 % gefunden, was zu einem Anstieg des Trockensubstanzgehaltes um etwa 3 bis 4 % führt. Das heißt, die Effektivität der in an sich bekannter Weise durchgeführten Schnitzeltrocknung wird deutlich erhöht. Dadurch wird es vorteilhafterweise möglich, im Ausgleich die Trommeleintrittstemperatur zu reduzieren. Dies führt zur Energieeinsparung. Die zu erzielende Einsparung an Primärenergie beträgt etwa 9 % (kwh pro tTS). Sekundär hängt der TOC-Gehalt im Abgas von Trocknungsanlagen unmittelbar von der Höhe der Trommeleintrittstemperatur, beziehungsweise Trocknungstemperatur ab: bei niedrigerer Trommeleintrittstemperatur wird der TOC-Gehalt in der Abluft reduziert. Besonders überraschend hat die erfindungsgemäße Zugabe der Kolloidfraktion also sowohl einen direkten Effekt auf die TOC-Freisetzung vor allem aufgrund der vorbeschriebenen chemischen Effekte. Ein weiterer, indirekter Effekt besteht in der Erhöhung der Effektivität der Trocknung, die zur Reduktion der Trommeleintrittstemperatur und zur damit verbundenen weiteren Reduzierung des TOC-Gehalts in der Abluft eingesetzt werden kann. Direkter und indirekter Effekt sind additiv. Durch die Erfindung kann also erreicht werden, dass besonders in herkömmlichen Schnitzeltrocknungsanlagen, das heißt Hochtemperaturschnitzeltrocknungsanlagen, die Schnitzeltrocknung unter deutlich verminderter TOC-Emission durchgeführt werden kann, sodass der mit dem Jahr 2010 geltende Emissionsgrenzwert erreicht und zuverlässig unterschritten werden kann. Dadurch wird es vor allem möglich, bereits bestehende Anlagen der Zuckerrübenverarbeitung durch jeweils nur geringe bauliche Modifikationen weiter wirtschaftlich und betriebsfähig zu halten.

Unter "alkalischer Kolloidfraktion" oder kolloidhaltiger Fraktion wird im Zusammenhang mit der Erfindung vor allem das aus Zuckerrüben-Rohsaft abtrennbare alkalische Nichtsaccharosestoffkonzentrat verstanden, das hauptsächlich hochmolekulare und insbesondere kolloidale Eiweißstoffe sowie daneben Polysaccharide, Zellwandbestandteile, sowie Salze niedrig molekularer organischer und anorganischer Säuren, Aminosäuren und/oder mineralische Stoffe enthalten kann. Weiter enthält die Kolloidfraktion gegebenenfalls die im Vorkalkungssaft enthaltenen Kalziumionen, die in unterschiedlichen Formen, vor allem aktiv als Kalziumhydroxid und passiv als schwerlösliche Kalziumsalze, enthalten sind. Unter "Nichtsaccharosestoffe" werden demgemäß vor allem hoch-molekulare Substanzen wie Eiweißstoffe, Polysaccharide und Zellwandbestandteile sowie niedrig molekulare organische Verbindungen wie anorganische oder organische Säuren und deren Salze, Aminosäuren sowie andere mineralische Stoffe verstanden. Bei den Zellwandbestandteilen handelt es sich besonders um Pektine, Lignin, Cellulose und Hemicellulose. Diese Stoffe liegen ebenso wie die Eiweiße, zu denen neben Proteinen, insbesondere Nucleoproteide gehören, als hydrophile Makromoleküle in kolloidaldisperser Form vor. Bei den organischen Säuren handelt es sich beispielsweise um Lactat, Citrat und Oxalat. Bei den anorganischen Säuren handelt es sich insbesondere um Sulfate und Phosphate. Besonders bevorzugt enthält die Fraktion Kolloide auf Basis von Stärke, Kolloide auf Basis von Cellulose, Kolloide auf Basis von Pektin, Kolloide auf Basis von Hemicellulose, Kolloide auf Basis von Lignin, Eiweißkolloide und/oder Mischungen davon.

Ohne an die Theorie gebunden zu sein, führt die erfindungsgemäß eingesetzte kolloidhaltige und alkalische Nichtsaccharosestoff-Fraktion zur Neutralisierung der in den Pressschnitzel vorhandenen flüchtigen organischen Säuren, die sich in herkömmlichen Verfahren während der Trocknung der Pressschnitzel, insbesondere bei höheren Trommeleintrittstemperaturen bilden und in die Abgase übergehen. Ohne an die Theorie gebunden zu sein, kommt es durch die Kolloidbestandteile der Fraktion in Verbindung mit der Alkalität zu Dehydratations-Effekten, wodurch Wasser aus den Pressschnitzeln an deren Oberfläche gezogen wird (wasserziehender Effekt). Von dort kann das Wasser leichter verdunsten. Der Vorgang der thermischen Trocknung wird damit erleichtert und dessen Effektivität maßgeblich verbessert. Diese Dehydratationswirkung der Kolloide zusammen mit den Effekten der Alkalisierung führt überraschend zu einem überadditiven Synergieeffekt. Die bei Zugabe der Kolloidfraktion erfolgende alkalische Verschiebung (typischerweise von etwa pH 5,5 auf etwa pH 9) überführt die, vor allem im Schnitzelinneren vorhandenen, Kolloide in einen anderen Ladungszustand. Dadurch wird unmittelbar das Dehydratations/Hydratationsverhalten der Kolloide beeinflusst, sodass das Abstoßen der Hydrathülle (Wasser) maßgeblich vereinfacht wird. Dieser Effekt war höchst überraschend und so nicht vorhersehbar. Selbstverständlich ist vorgesehen, das erfindungsgemäße Verfahren mit weiteren bekannten Maßnahmen zur Reduktion der TOC-Emission zu kombinieren. In Frage kommen besonders die indirekte Trocknung im geschlossenen System mittels überhitztem Wasserdampf und/oder die nachfolgende Abgasreinigung der Trocknungsabluft, beispielsweise durch Fliehkraftabscheider (Zyklone), Nasswäscher und/oder chemische Wäscher.

Bevorzugt wird die alkalische Kolloidfraktion bei der Saftreinigung aus dem Vorkalkungssaft gewonnen. Dies geschieht im Verlauf der Saftreinigung während oder nach der Vorkalkungsstufe. Bevorzugt wird die alkalische Kolloidfraktion im Verlauf der Saftreinigung vor der Hauptkalkungsstufe gewonnen, indem die. Fraktion aus dem Rohsaft abgetrennt wird. Vorzugsweise wird die alkalisch Kolloidfraktion durch Fällung und/oder Koagulation der Eiweißstoffe aus dem Rohsaft abgetrennt. Gegebenenfalls wird, vorzugsweise während oder nach erfolgter Fällung und/oder Koagulation der Kolloide ein mechanischer und/oder physikalischer Abtrennschritt durchgeführt, um die kolloidale eiweißhaltige Fraktion abzutrennen. Durch die bevorzugte Fällung wird ein so genannter Fällungs- und/oder Koagulatschlamm erhalten, der die erfindungsgemäß eingesetzte alkalische Kolloidfraktion enthält. Hier wird bevorzugt durch mindestens eine Vorrichtung, ausgewählt aus statischen Dekantern, Dekanterzentrifugen, Tellerzentrifugen, Tellerseparatoren und Membranfilterpressen und Kombinationen davon, abgetrennt. Bevorzugt wird zur Abtrennung der kolloidhaltigen Fraktion aus dem Vorkalkungssaft eine Dekanterzentrifuge eingesetzt.

Um die Fällung und/oder Koagulation der Kolloidfraktion zu unterstützen, wird bevorzugt mindestens ein Fällungshilfsmittel zudosiert. Vorzugsweise ist das Flockungshilfsmittel ausgewählt aus polyanionischen Flockungshilfsmitteln. Darunter zählen bevorzugt polyanionische Polysaccharide und solche auf Polyacrylbasis. In einer Variante sind die Flockungshilfsmittel ausgewählt aus Acrylamid und aus Copolymeren aus Acrylamid und Natriumacrylat sowie Gemischen davon. Besonders bevorzugt sind Flockungshilfsmittel auf Basis von derivatischer Stärke oder Cellulose. Bevorzugt sind dies alkoxylierte Stärke, alkoxylierte Cellulose, carboxymethylierte Stärke sowie carboxymethylierte Cellulose. Vorzugsweise wird das Flockungshilfsmittel in einer Dosis von 1 bis 8 ppm, bevorzugt von 2 bis 3 ppm zugegeben. Das Flockungshilfsmittel weist bevorzugt eine mittlere molare Masse von 5 Mio. bis 22 Mio. g/mol auf. Die Zugabe des Flockungshilfsmittels erfolgt im Verlauf der Saftreinigung vor, während und/oder nach der Vorkalkungsstufe. Vorzugsweise erfolgt die Zugabe nach der Vorkalkung.

Die mittels des erfindungsgemäßen Verfahrens erhältlichen Trockenschnitzel werden vorzugsweise als Futtermittel oder Futtermittelbestandteil eingesetzt. Die Erfindung betrifft daher auch ein verbessertes Verfahren zur Herstellung von Futtermittel oder Futtermittelbestandteil aus extrahierten Zuckerrübenschnitzeln, das durch die vorstehende Verfahrensweise gekennzeichnet ist. Erfindungsgemäß weist das Futtermittel die erfindungsgemäß getrockneten Rübenschnitzel, einen Anteil der erfindungsgemäß für die Schnitzeltrocknung als technischem Hilfsstoff zudosierten alkalischen Kolloidfraktion und gegebenenfalls zudosierte Melasse auf. Das gemäß der Erfindung hergestellte Futtermittel besteht also allein aus Nebenerzeugnissen der Zuckerproduktion.

Ein weiterer Gegenstand der Erfindung ist die Verwendung der vorbeschriebenen kolloidalen alkalischen Fraktion zur Verbesserung der Schnitzeltrocknung, insbesondere der Erhöhung der Effektivität der Schnitzeltrocknung, zur Erhöhung des Trockensubstanzgehalts der getrockneten Schnitzel, zur Verringerung der Trommeleintrittstemperatur und zur Verminderung der TOC-Emission in der Schnitzeltrocknungsabluft sowie zur Verminderung der Staubemission. Vorzugweise wird bei der erfindungsgemäßen Verwendung das vorbeschriebene erfindungsgemäße Verfahren durchgeführt.

Schließlich ist ein weiterer Gegenstand der Erfindung eine Vorrichtung zur verbesserten Trocknung von extrahierten Zuckerrübenschnitzeln, eine Rübenschnitzeltrocknungsanlage, die sich von bekannten Zuckerrübenverarbeitungsanlagen für die Gewinnung von Saccharose und Trockenschnitzeln ableitet. Die erfindungsgemäße Rübenschnitzeltrocknungsanlage weißt erfindungsgemäß eine Dosiereinrichtung zur Dosierung der, bevorzugt in der Saftreinigung abgetrennten, alkalischen Kolloidfraktion in die abgepressten zu trocknenden Schnitzel auf. Die Anlage zeichnet sich bevorzugt dadurch aus, dass eine bekannte Saftreinigungsstufe vorgesehen ist, die erfindungsgemäß, vorzugsweise im Nebenstrom, mit einer ebenfalls vorgesehenen bekannten Schnitzeltrocknungsanlage derart in Verbindung steht, dass eine in der Saftreinigung abtrennbare alkalische Kolloidfraktion, beispielsweise als Bestandteil des abtrennbaren Nichtsaccharosestoffkonzentrats, den Pressschnitzeln vor oder bei Eintrag in die Schnitzeltrocknungsanlage gemäß der Erfindung zudosierbar ist. Die erfindungsgemäße Vorrichtung erlaubt die Durchführung des vorstehend beschriebenen erfindungsgemäßen Verfahrens. Vor allem weist die Vorrichtung zumindest folgende Elemente auf: Eine Saftreinigungsstufe zur Extraktreinigung von Zuckerrüben-Rohsaft, vorzugsweise enthaltend eine Vorkalkungsstufe und mindestens eine Hauptkalkungsstufe, woraus vom Rohsaft eine alkalische kolloidhaltige Fraktion abtrennbar ist; und eine Schnitzeltrocknungsstufe mit Trockentrommel zum Trocknen der extrahierten Rübenschnitzel, mit Dosiereinrichtung zur Dosierung der kolloidhaltigen Fraktion in die zu trocknenden Schnitzel, wobei die Schnitzeltrocknungsstufe eine Dosiereinrichtung zur Dosierung der kolloidhaltigen Fraktion in die zu trocknenden Schnitzel aufweist und die Saftreinigungsstufe mit der Schnitzeltrocknungsstufe, gegebenenfalls über einen Zwischenbehälter oder Lagerbehälter, so in Fluidverbindung steht, dass kolloidhaltige Fraktion aus der Saftreinigungsstufe, gegebenenfalls über Zwischenspeicher und/oder Zwischenstufen in die Dosiereinrichtung der Schnitzeltrocknungsstufe überführbar ist. Die Dosiereinrichtung ist der Trockentrommel der Schnitzeltrocknungsstufe, vorzugsweise unmittelbar, vorgeschaltet. In einer Variante ist zwischen Dosiereinrichtung und Trockentrommel eine Zwischenlagerung, beispielsweise ein Bunker, und/oder eine oder mehrere Zwischenstufen vorgesehen.

Vorzugsweise weist die Saftreinigungsstufe mindestens eine Vorrichtung zur mechanischen/physikalischen Abtrennung alkalischer kolloidhaltiger Fraktion aus dem Vorkalkungssaft auf. Diese ist bevorzugt ausgewählt aus: statischen Dekantern, Dekanterzentrifugen, Tellerzentrifugen, Tellerseparatoren und Membranfilterpressen und Kombinationen davon. Die Abtrennvorrichtung kann teilweise oder vollständig nach der Vorkalkungsstufe realisiert sein.

### Ausführungsbeispiele

Die Erfindung wird durch die nachfolgenden Figuren und Beispiele näher erläutert, ohne das diese beschränkend zu verstehen sind. Der Fachmann wird für ihn selbstverständliche Abweichungen oder Modifikationen der vorgestellten Erfindung mit als zur Lehre der Erfindung gehörig ansehen.

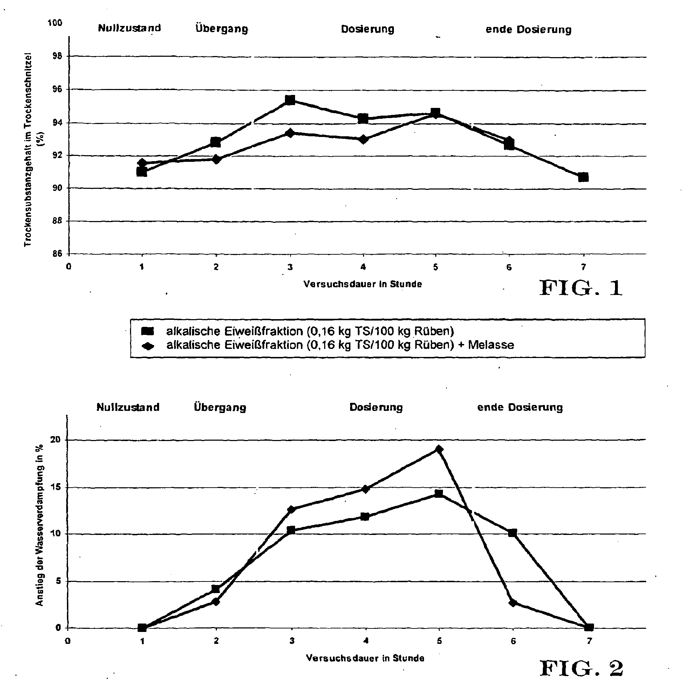

- Figur 1: zeigt die graphische Darstellung des Trockensubstanzgehalts [in %] der erhaltenen Trockenschnitzel im Verlauf eines Experiments, welches die erfindungsgemäße Zudosierung einer alkalischen Kolloidfraktion (alkalische Eiweißfraktion) und/oder einer alkalischen Kolloidfraktion zusammen mit Melasse vorsieht: der Zeitpunkt 1 Std. zeigt den Nullzustand ohne Dosierung, ab dem Zeitpunkt 2 Std. ist der signifikante Effekt der erfindungsgemäßen Zudosierung auf den Trockensubstanzgehalt zu erkennen, mit Beenden der Dosierung kehren die Werte auf den Normalzustand zurück.
- Figur 2: zeigt die graphische Darstellung des Anstiegs der Wasserverdampfung im Verlauf eines Experiments, welches die erfindungsgemäße Zudosierung einer alkalischen Kolloidfraktion (Eiweißfraktion) zusammen mit Melasse vorsieht: der Zeitpunkt 1 Std. zeigt den Nullzustand ohne Dosierung, ab dem Zeitpunkt 2 Std. ist der signifikante Effekt der erfindungsgemäßen Zudosierung auf die Wasserverdampfung zu erkennen, mit Beenden der Dosierung kehren die Werte auf den Normalzustand zurück.

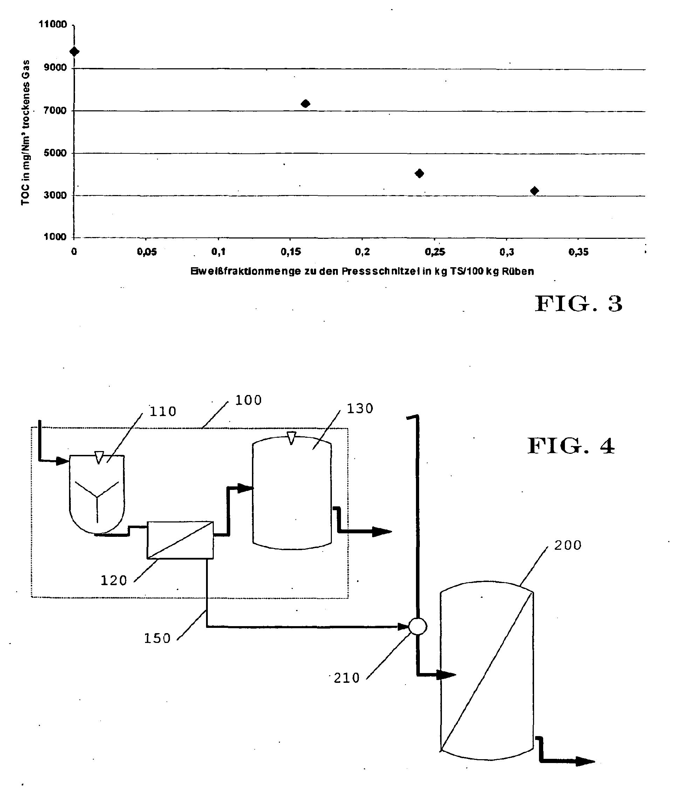

- Figur 3: zeigt die graphische Darstellung der Abhängigkeit der TOC-Emission von der Menge an zudosierter alkalischer Kolloidfraktion (Eiweißfraktion).
- Figur 4: zeigt die schematische Darstellung einer bevorzugten Ausführungsform der erfindungsgemäßen Vorrichtung mit einer Saftreinigungsstufe (100) mit Vorkalkungsstufe (110), Hauptkalkungsstufe (130), Abtrennvorrichtung (120) und Leitung (150) sowie eine Schnitzeltrocknungsstufe (200) mit Dosiereinrichtung (210).

### Beispiel: Schadstoffarme Trocknung von Zuckerrübenschnitzeln

Im laufenden Prozess der Zuckerherstellung in einer Zuckerfabrik wurde die in der Saftreinigungsstufe mittels Dekanterzentrifuge abgetrennte alkalische kolloidhaltige Nichtsaccharosestoff-Fraktion an einer Dosierstelle mit Mischschnecke, die vor der Trocknungstrommel installiert wurde, den abgepressten Pressschnitzeln kurz vor Eintritt in die Trocknungstrommel zugemischt.

Die Antrocknungsversuche wurden mit unterschiedlichen Anteilen der Kolloidfraktion durchgeführt. Es wurden Anteile ab 0,1 kgTS pro 100 kg Rüben zudosiert. In einigen Versuchen wurde den Pressschnitzeln die Kolloidfraktion zusammen mit Melasse zugemischt. Die Trocknung erfolgte in an sich bekannter Weise.

Es wurde eine signifikante Verminderung des Staubgehaltes in den Abgasen der Trocknungsanlage festgestellt.

Es wurde eine signifikante Verminderung von bis zu 50 % des Gehaltes an flüchtigen organischen Kohlenstoffverbindungen in den Abgasen der Trocknungsanlage festgestellt. Die maximale Reduktion tritt in der vorliegenden Versuchsreihe bei Anteilen von 0,2 bis 0,4 kgTS pro 100 kg Rüben auf. Beispielsweise vermindert sich die TOC-Fracht im Abgas vom Vergleichswert 0,095 kg TOC pro t Rüben auf 0,070 bei einer Dosierung von 0,40. Eine weitere Erhöhung des Anteils der zudosierten alkalischen Kolloidfraktion über 0,8 kg TS pro 100 kg hinaus verschlechtert den Effekt.

Es wurde eine signifikante Verminderung des SO₂-Gehaltes in den Abgasen der Trocknungsanlage festgestellt. Die maximale Reduktion tritt in der vorliegenden Versuchsreihe bei Anteilen von 0,2 bis 0,4 kgTS pro 100 kg Rüben auf.

Nach der Dosierung der alkalischen Kolloidfraktionen (mit oder ohne Melasse) mit einem Anteil von 0,16 kgTS pro 100 kg Rüben wurde ein Anstieg der Wasserverdampfung um ca. 14-18 % festgestellt; der Trockensubstanzgehalt (in % absolut) der Trockenschnitzel ist dabei um 4 bis 5 %-Punkte erhöht.

Bei Versuchen konnte weiter festgestellt werden, dass der Primärenergiebedarf, gemessen in kWh pro Tonne (TS) Rüben, zur Erzielung desselben Trocknungsgrads durch Zugabe der alkalischen Kolloidfraktion um etwa 9 % reduziert werden kann. Die effektivste Dosis liegt auch hier im Bereich von 0,2 bis 0,4 kgTS pro 100 kg Rüben.

### Vergleichsbeispiel

In weiteren Trocknungsversuchen wurden andere Medien zugesetzt:
Melasse (80% TS),
Vinasse,
mit Kalkmilch alkalisierte Melasse,
mit NaOH alkalisierte Melasse,
Schlempe aus der Bioethanolherstellung

In keinem Fall konnten die für die erfindungsgemäße kolloidale alkalische Fraktion gefundenen signifikanten vorteilhaften Effekte gefunden werden.

## Patentansprüche

1. Verfahren zur Trocknung von extrahierten Rübenschnitzeln, umfassend die Schritte:
Zudosieren von alkalischer Kolloidfraktion, ausgewählt aus Nichtsaccharosestoffen, Stärkekolloiden, Cellulosekolloiden, Pektinkolloiden, Hemicellulosekolloiden, Ligninkolloiden, Eiweißkolloiden und Mischungen davon, zu den Schnitzeln; und
Trocknen der Schnitzel.

2. Verfahren nach Anspruch 1, wobei die alkalische Kolloidfraktion in zusammen mit bei der Zuckergewinnung aus Zuckerrüben-Rohsaft anfallender Melasse zudosiert wird.

3. Verfahren nach einem der vorstehenden Ansprüche, wobei die alkalische Kolloidfraktion als bei der Saftreinigung von Zuckerrüben-Rohsaft abgetrenntes Nichtsaccharosestoffkonzentrat vorliegt.

4. Verfahren nach einem der vorstehenden Ansprüche, wobei die alkalische Kolloidfraktion durch Fällung und/oder Koagulation und gegebenenfalls mechanisches und/oder physikalisches Abtrennen direkt aus dem Zuckerrüben-Rohsaft gewonnen wird.

5. Verfahren nach Anspruch 3, wobei die alkalische Kolloidfraktion nach der bei der Saftreinigung vorgesehenen Vorkalkungsstufe aus dem Vorkalkungssaft genommen wird.

6. Verfahren nach Anspruch 3 oder 5, wobei die alkalische Kolloidfraktion im Verlauf vor der bei der Saftreinigung vorgesehenen Hauptkalkungsstufe genommen wird.

7. Verfahren nach einem der Ansprüche 3 bis 6, wobei die Fällung und/oder Koagulation der alkalischen Kolloidfraktion durch Zugabe von Flockungshilfsmittel unterstützt wird.

8. Verfahren nach einem der Ansprüche 3 bis 7, wobei die alkalische Kolloidfraktion durch mindestens eine Vorrichtung, ausgewählt aus statischen Dekantern, Dekanterzentrifugen, Tellerzentrifugen, Tellerseparatoren und Membranfilterpressen, abgetrennt wird.

9. Verwendung der in den vorstehenden Ansprüchen charakterisierten alkalischen Kolloidfraktion als technischer Hilfsstoff bei der Schnitzeltrocknung zur Steigerung der Wasserverdampfung bei der Trocknung und Erhöhung des Trockensubstanzgehalts der getrockneten Schnitzel.

10. Verwendung der in den vorstehenden Ansprüchen charakterisierten alkalischen Kolloidfraktion als technischer Hilfsstoff bei der Schnitzeltrocknung zur Verringerung der Trommeleintrittstemperatur.

11. Verwendung der in den vorstehenden Ansprüchen charakterisierten alkalischen Kolloidfraktion als technischer Hilfsstoff bei der Schnitzeltrocknung zur Verminderung der TOC-Emission in der Schnitzeltrocknungsabluft.

12. Rübenschnitzeltrocknungsanlage, umfassend eine Schnitzeltrocknungsstufe (200) mit Dosiereinrichtung (210) zur Dosierung von alkalischer Kolloidfraktion in die Schnitzel, **dadurch gekennzeichnet, dass** die Anlage eine Leitung (150) aufweist, die mit einer Abtrennstufe (120) einer Saftreinigungsstufe (100) in Verbindung steht zur Zuführung der in der Saftreinigung abgetrennten alkalischen Kolloidfraktion.

## Claims

1. A method of drying extracted beet chips, comprising the steps:
addition of an alkaline colloid fraction, selected from non-sucrose substances, starch colloids, cellulose colloids, pectin colloids, hemicellulose colloids, lignin colloids, protein colloids and mixtures thereof, to the chips; and
drying of the chips.

2. The method according to claim 1, wherein the alkaline colloid fraction in combination with the molasses resulting during the sugar recovery from raw sugar beet juice is added.

3. The method according to any one of the preceding claims, wherein the alkaline colloid fraction is a non-sucrose substance concentrate that was separated during the juice purification of raw sugar beet juice.

4. The method according to any one of the preceding claims, wherein the alkaline colloid fraction is taken directly from the raw sugar beet juice by precipitation and/or coagulation and optionally mechanical and/or physical separation.

5. The method according to claim 3, wherein the alkaline colloid fraction is obtained from the pre-liming juice after the pre-liming stage used during juice purification.

6. The method according to claim 3 or 5, wherein the alkaline colloid fraction is taken in the course prior to the main liming stage used during juice purification.

7. The method according to any of claims 3 to 6, wherein the precipitation and/or coagulation of the alkaline colloid fraction is enhanced by the addition of a flocculation aid.

8. The method according to any one of claims 3 to 7, wherein the alkaline colloid fraction is separated by at least one device selected from the group of static decanters, centrifugal decanters, disk centrifuges, disk separators and membrane filter presses.

9. Use of the alkaline colloid fraction **characterized in** the preceding claims as a technical auxiliary agent in the chip drying stage to increase the water evaporation during drying and to increase the dry matter content of the dried chips.

10. Use of the alkaline colloid fraction **characterized in** the preceding claims as a technical auxiliary agent in the chip drying stage to reduce the drum entry temperature.

11. Use of the alkaline colloid fraction **characterized in** the preceding claims as a technical auxiliary agent in the chip drying stage to reduce the TOC emission in the waste air of the chip drying system.

12. A beet chip drying system, comprising a chip drying stage (200) with a metering device (210) for metering an alkaline colloid fraction into the chips, **characterized in that** the system comprises a feed line (150) which is connected with a separating stage (120) of a juice purification stage (100) so as to feed in the alkaline colloid fraction that was separated during juice purification.

## Revendications

1. Procédé de séchage de cossettes extraites, comprenant les étapes de :
ajout d'une fraction colloïdale alcaline, sélectionnée parmi des substances différentes de la saccharose, des colloïdes d'amidon, des colloïdes de cellulose, des colloïdes de pectine, des colloïdes d'hémicellulose, des colloïdes de lignine, des colloïdes de protéine et des mélanges de ceux-ci, aux cossettes ; et
séchage des cossettes.

2. Procédé selon la revendication 1, dans lequel la fraction colloïdale alcaline est ajoutée conjointement à de la mélasse qui précipite lors de l'obtention de sucre provenant du jus brut de betteraves à sucre.

3. Procédé selon l'une quelconque des revendications précédentes, dans lequel la fraction colloïdale alcaline est présente en tant que concentré de substance différente de la saccharose séparé du jus brut de betteraves à sucre lors de la purification du jus.

4. Procédé selon l'une quelconque des revendications précédentes, dans lequel la fraction colloïdale alcaline est obtenue par précipitation et/ou coagulation et éventuellement séparation mécanique et/ou physique directement à partir du jus brut de betteraves à sucre.

5. Procédé selon la revendication 3, dans lequel la fraction colloïdale alcaline est prélevée du jus de chaulage préalable après l'étape de chaulage préalable prévue lors de la purification du jus.

6. Procédé selon la revendication 3 ou 5, dans lequel la fraction colloïdale alcaline est prélevée dans le processus avant l'étape de chaulage principal prévue lors de la purification du jus.

7. Procédé selon l'une quelconque des revendications 3 à 6, dans lequel la précipitation et/ou coagulation de la fraction colloïdale alcaline est assistée par l'addition d'adjuvant de floculation.

8. Procédé selon l'une quelconque des revendications 3 à 7, dans lequel la fraction colloïdale alcaline est séparée par au moins un dispositif sélectionné parmi des décanteurs statiques, des centrifugeuses à décanteur, des centrifugeuses à plateau, des séparateurs à plateau et des presses filtrant à membrane.

9. Utilisation de la fraction colloïdale alcaline caractérisée dans les revendications précédentes en tant qu'adjuvant technique lors du séchage de cossettes en vue d'augmenter l'évaporation d'eau lors du séchage et d'augmenter la teneur en substance sèche des cossettes séchées.

10. Utilisation de la fraction colloïdale alcaline caractérisée dans les revendications précédentes en tant qu'adjuvant technique lors du séchage de cossettes en vue de réduire la température d'entrée dans le tambour.

11. Utilisation de la fraction colloïdale alcaline caractérisée dans les revendications précédentes en tant qu'adjuvant technique lors du séchage de cossettes en vue de réduire l'émission de TOC dans l'air d'évacuation de séchage de cossettes.

12. Installation de séchage de cossettes, comprenant un étape de séchage de cossettes (200) avec un dispositif de dosage (210) pour le dosage de la fraction colloïdale alcaline dans les cossettes, **caractérisée en ce que** l'installation présente une conduite (150) qui est connectée à un étape de séparation (120) d'un étape de purification de jus (100) pour l'amenée de la fraction colloïdale alcaline séparée lors de la purification du jus.
